# EUROPÄISCHE PATENTSCHRIFT

(11) **EP 3 832 628 B1**
(45) Veröffentlichungstag und Bekanntmachung des Hinweises auf die Patenterteilung: **02.08.2023**
(21) Anmeldenummer: 20209990.9
(22) Anmeldetag: 27.05.2014
(51) Int. Cl.: G09B 9/05

(54) **LANDMASCHINENSIMULATOR**
AGRICULTURAL VEHICLE SIMULATOR
SIMULATEUR DE MACHINE AGRICOLE

(30) Priorität: 22.07.2013 DE 102013107766
(43) Veröffentlichungstag der Anmeldung: 09.06.2021
(62) Teilanmeldung aus: 14170042.7
(73) Patentinhaber: CLAAS Selbstfahrende Erntemaschinen GmbH, 33428 Harsewinkel (DE)
(72) Erfinder: Neu, Sebastian, 49196 Bad Laer (DE); Bergmann, Kai, 33824 Werther (DE); Vonde, Marcel, 49176 Hilter am Teutoburger Wald (DE); Rehders, Olaf, 48351 Everswinkel (DE); Piontek, Michael, 23701 Suesel (DE); Broer, Jens, 33181 Bad Wünnenberg (DE); Mattich, Benjamin, 32602 Vlotho (DE); Kettelhoit, Boris, 33335 Gütersloh (DE)
(74) Vertreter: CLAAS Gruppe

(56) Entgegenhaltungen:
- WO-A1-02/21480
- FR-A1- 2 769 112
- US-A1- 2006 040 239

## Beschreibung

### Landmaschinensimulator

Die Erfindung betrifft einen Simulator einer landwirtschaftlichen Arbeitsmaschine zumindest eine Anzeigeeinheit umfassend nach dem Oberbegriff des Anspruchs 1.

Aus dem Bereich von Fahrzeugen per se ist ein umfangreicher Stand der Technik bekannt, der sich mit der Simulation von Fahrzeugen mit dem Ziel befasst, dass Bediener dieser Fahrzeuge in einer Simulationsumgebung ihre Fähigkeiten bezüglich der Bedienung der jeweiligen Fahrzeuge trainieren können, ohne dafür das tatsächliche Fahrzeug auf der Straße oder im Gelände führen zu müssen. Beispielhaft sei hier auf die EP 1 231 582 verwiesen, in der ein Fahrsimulator zur Simulation der Bewegung eines Fahrzeugs auf der Straße offenbart ist. Ziel derartiger Systeme ist es den Fahrer des Fahrzeugs in der Bedienung des Fahrzeugs zu trainieren, sodass der Fahrer auch schwierige Fahrsituation trainieren kann ohne sich und andere gefährlichen Situationen auszusetzen. Ein wesentlicher Nachteil derartige Systeme ist es jedoch, dass die Fahrsimulatoren wegen der realistischen Abbildung der Umwelt technisch aufwendig konzipiert sind und der Bediener stets einen solchen Simulator aufsuchen muss, und diesen nicht flexibel von einem beliebigen Ort aus bedienen kann. Andere Fahrsimulatoren sind in WO02/21480A1, FR2769112A1 und US2006/040239A1 offenbart.

Es ist deshalb Aufgabe der Erfindung die beschriebenen Nachteile des Standes der Technik zu vermeiden und insbesondere einen Maschinensimulator zu schaffen, der einfach handhabbar ist und ohne aufwendiges technisches Equipment auskommt.

Diese Aufgabe wird erfindungsgemäß durch die kennzeichnenden Merkmale des Anspruchs 1 gelöst.

Indem der Simulator einer landwirtschaftlichen Arbeitsmaschine, zumindest eine Anzeigeneinheit umfasst, wobei die zumindest eine Anzeigeneinheit mit einer Bedieneinheit und zumindest einer Recheneinheit gekoppelt ist und wobei die zu simulierende landwirtschaftliche Arbeitsmaschine einstellbare Arbeitsorgane und die Einstellung der Arbeitsorgane realisierende Bedienelemente umfasst und in der Recheneinheit ein Softwaremodul hinterlegt ist und der Softwaremodul zumindest das Prozessmodell des von der landwirtschaftlichen Arbeitsmaschine durchzuführenden Gutbearbeitungsprozesses und das aus dem Gutbearbeitungsprozess folgende Maschinenverhalten abbildet und die Anzeigeeinheit eine realitätsnahe Bedienoberfläche in der Weise simuliert, dass neben der Visualisierung der realen Bedienelemente der Gutbearbeitungsprozess und das Maschinenverhalten visualisiert werden wird sichergestellt, dass der zu schaffende Maschinensimulator einfach handhabbar ist und ohne aufwendiges technisches Equipment auskommt.

In diesem Zusammenhang ist nach Anspruch 1 vorgesehen, dass das Prozessmodell in der Anzeigeeinheit visualisiert wird und mittels der Bedieneinheit editierbar ist.

Den realen Bedingungen nahekommende Simulationsergebnisse des gesamten Gutbearbeitungsprozesses werden dann erreicht, wenn in einer vorteilhaften Ausgestaltung der Erfindung das in der Anzeigeneinheit visualisierte Maschinenverhalten Qualitätsparameter der landwirtschaftlichen Arbeitsmaschine umfasst und diese in der Weise ermittelt werden, dass das Prozessmodell gutspezifische Parameter, maschinenspezifische Parameter und umweltspezifische Parameter berücksichtigt, aus diesen Parametern anhand hinterlegter Kennlinien und/oder Kennlinienfelder zumindest diese Qualitätsparameter der landwirtschaftlichen Arbeitsmaschine ermittelt Dies hat zugleich den Effekt, dass der Bediener des Simulators sich neben Kenntnissen über Prozesszusammenhänge Fähigkeiten bezüglich einer optimalen Maschineneinstellung erarbeiten kann.

Damit der Bediener die Bedienverhältnisse am Simulator gut in die landwirtschaftliche Arbeitsmaschine übertragen kann ist zudem vorgesehen, dass die Anzeigeeinheit ein elektronisches Bordinformationssystem, ein elektronisches Maschinenoptimierungssystem, den Fahrautomat und die Bedienoberfläche realitätsnah visualisiert.

Die Simulation der realen Verhältnisse wird umso präziser sein je mehr Parameter des realen Prozesses berücksichtigt werden, sodass in der Erfindung vorgesehen ist, dass die Recheneinheit Softwaremodule zur Simulation des Prozessmodells, des Maschinenverhaltens und der der jeweiligen landwirtschaftlichen Arbeitsmaschine zugeordneten Steuergeräte umfasst und wobei die Softwaremodule zumindest das elektronische Bordinformationssystem und/oder das elektronische Maschinenoptimierungssystem und/oder den Fahrautomat nachbilden, wobei zumindest die Softwaremodule, die Anzeigeeinheit und das oder die hinterlegten Prozessmodelle softwareseitig über einen virtuellen CAN-Bus miteinander verknüpft sind. Dies hat zudem den Effekt, dass der Simulator in einem Home-PC abgebildet werden kann und die zu verarbeitenden Datenmengen mit der Rechenleistung eines Home-PC's korrespondieren.

Um den Nutzer des Simulators vor einer Reizüberflutung zu schützen und zugleich einen hohen Widererkennungswert an der wirklichen landwirtschaftlichen Arbeitsmaschine sicherzustellen, ist in einer weiteren vorteilhaften Ausgestaltung der Erfindung vorgesehen, dass die Visualisierung der realitätsnahen Bedienoberfläche zumindest das Lenkrad und in der Fahrzeugkabine der jeweiligen landwirtschaftlichen Arbeitsmaschine positionierte Bedienelemente umfasst. Dieser Effekt wird auch dadurch noch erhöht, wenn die Bedienelemente sowohl einer Maschinenkonsole als auch in der Fahrzeugkabine der landwirtschaftlichen Arbeitsmaschine positionierten Anzeigeeinheiten zugeordnete Bedienelemente umfassen.

Eine einfache Umsetzung der simulierten Betätigung der Bedienelemente wird dann erreicht, wenn in einer vorteilhaften Ausgestaltung dem Lenkrad und den Bedienelementen Richtungspfeile zugeordnet sind bei deren Aktivierung das Lenkrad und die jeweiligen Bedienelemente betätigt werden.

Eine den realen Bedingungen auf einer landwirtschaftlichen Arbeitsmaschine nahekommende Simulationsbedingungen bezüglich der Einstellung editierbarer Parameter wird dann erreicht, wenn die Aktivierung der Richtungspfeile eine Lenkbewegung oder die Einstellung eines Maschinenparameters simuliert, wobei die Aktivierung der Bedienelemente ein Auswählen eines Arbeitsmenüs, ein Navigieren in dem gewählten Arbeitsmenü und ein Auswählen bestimmter Einstellwerte der Maschinenparameter umfasst. Dieser Effekt wird auch dadurch noch verbessert, dass in einer weiteren vorteilhaften Ausgestaltung der Erfindung die Aktivierung der Richtungspfeile durch Betätigung eines der Recheneinheit zugeordneten graphischen Betätigungsmittels oder bei Ausführung der Anzeigeeinheit als Touchscreen-Monitor durch unmittelbare Berührung auf dem Touchscreen-Monitor bewirkt wird.

Eine einfache Nachbildung der komplexen Steuerungsvorgänge innerhalb der landwirtschaftlichen Arbeitsmaschine kann zudem dadurch erreicht, dass die simulierte landwirtschaftliche Arbeitsmaschine eine Vielzahl von steuerbaren Arbeitsorganen umfasst und die Steuerung der Arbeitsorgane durch diesen zugeordnete Steuergeräte in der Weise simuliert wird, dass die Recheneinheit zumindest ein das logische Verhalten der Steuergeräte simulierenden Softwaremodul umfasst.

Indem die Anzeigeeinheit eine realitätsnahe Bedienoberfläche in der Weise simuliert, dass neben der Visualisierung der realen Bedienelemente der Gutbearbeitungsprozess und das Maschinenverhalten visualisiert werden wird sichergestellt, dass der Bediener realitätsnahe Simulationsbedingungen vorfindet, die ihn in die Lage versetzen, seine Fähigkeiten eine landwirtschaftliche Arbeitsmaschine effizient in einem Ernteprozess zu führen vorab zu trainieren.

Damit der Maschinensimulator ohne aufwendige technische Mittel auskommt und flexibel genutzt werden kann vorgesehen sein, dass die Recheneinheit als Home-PC ausgeführt ist und zumindest das den Simulator bildende Softwaremodul in einem globalen Datennetzwerk und/oder einer Cloud verfügbar und mittels Home-PC aktivierbar ist. Dies hat zudem den Effekt, dass die Simulation des Maschinenverhaltens der landwirtschaftlichen Arbeitsmaschine als Online-Lernplattform strukturiert sein kann.

Die Qualität der Simulationsergebnisse wird vor allem dadurch beeinflusst, dass das Prozessmodell und das daraus abgeleitete Maschinenverhalten reale Betriebszustände der landwirtschaftlichen Arbeitsmaschine abbilden.

Der Simulator ist zudem hochflexibel anwendbar, da der Typ der zu simulierenden landwirtschaftlichen Arbeitsmaschine auswählbar ist und die zumindest jeweils zu aktivierenden, das elektronische Bordinformationssystem, das elektronische Maschinenoptimierungssystem und den Fahrautomat betreffenden Softwaremodule den Originalsoftwaremodulen entsprechen.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Ansicht einer zu simulierenden landwirtschaftlichen Arbeitsmaschine
- Figur 2: eine Detailansicht der zu simulierenden Prozessmodule
- Figur 3: eine schematische Ansicht des erfindungsgemäßen Simulators einer landwirtschaftlichen Arbeitsmaschine
- Figur 4: eine Detailansicht der Struktur des Simulators nach Figur 3
- Figur 5: eine Detailansicht einer simulierten Maschineneinstellung

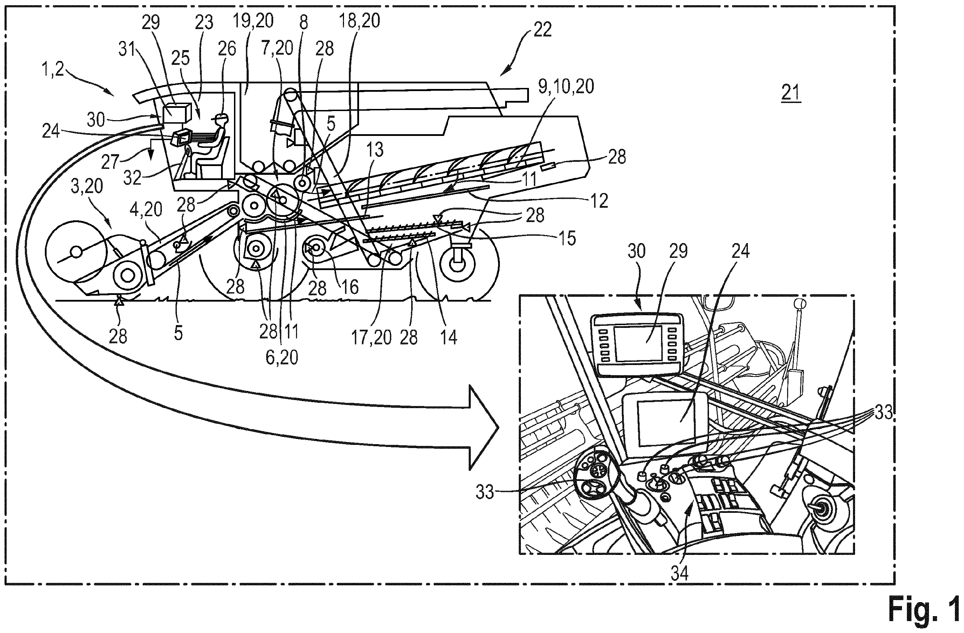

Die in Fig. 1 schematisch dargestellte, als Mähdrescher 2 ausgeführte landwirtschaftliche Arbeitsmaschine 1 bildet das von dem nachfolgend näher zu beschreibenden erfindungsgemäßen Simulator 21 zu simulierende Simulationsobjekt 22. Der Mähdrescher 2 nimmt in seinem frontseitigen Bereich ein Getreideschneidwerk 3 auf, welches in an sich bekannter Weise mit dem Schrägförderer 4 des Mähdreschers 2 verbunden ist. Der den Schrägförderer 4 durchlaufende Erntegutstrom 5 wird in dem obenseitigen, rückwärtigen Bereich des Schrägförderers 4 an die untenseitig zumindest teilweise von einem sogenannten Dreschkorb 6 ummantelten Dreschorgane 7 des Mähdreschers 2 übergeben. Eine den Dreschorganen 7 nachgeordnete Umlenktrommel 8 lenkt den im rückwärtigen Bereich der Dreschorgane 7 aus diesen austretenden Gutstrom 5 so um, dass er unmittelbar an eine als Trennrotor 9 ausgeführte Trenneinrichtung 10 übergeben wird. In dem rotierenden Trennrotor 9 wird der Gutstrom 5 so gefördert, dass in dem Gutstrom 5 enthaltene freibewegliche Körner 11 im untenseitigen Bereich des Trennrotors 9 abgeschieden werden. Es liegt im Rahmen der Erfindung, dass die im dargestellten Ausführungsbeispiel als Trennrotor 9 ausgeführte Trenneinrichtung 10 auch als an sich bekannter und daher nicht dargestellter Hordenschüttler ausgeführt sein kann. Sowohl die am Dreschkorb 6 als auch am Trennrotor 9 abgeschiedenen Körner 11 werden über Rücklaufboden 12 und Zuführboden 13 einer aus mehreren Siebebenen 14, 15 und einem Gebläse 16 bestehenden Reinigungseinrichtung 17 zugeführt. Der gereinigte Körnerstrom wird schließlich mittels Elevatoren 18 an einen Korntank 19 übergeben. Im Folgenden werden das Getreideschneidwerk 3, der Schrägförderer 4, die Dreschorgane 7 und der ihnen zugeordnete Dreschkorb 6, die Trenneinrichtung 10, die Reinigungseinrichtung 17, die Elevatoren 18 und der Korntank 19 als Arbeitsorgane 20 der landwirtschaftlichen Arbeitsmaschine 1 bezeichnet.

Weiter verfügt die landwirtschaftliche Arbeitsmaschine 1 über eine Fahrzeugkabine 23 in der zumindest eine mit einer Anzeigeeinheit 24 versehene Steuer- und Regeleinrichtung 25 angeordnet ist, mittels derer automatisch oder vom Bediener 26 der landwirtschaftlichen Arbeitsmaschine 1 initiiert eine Vielzahl von an sich bekannten und daher nicht näher erläuterten Prozessen gesteuert werden können. Die Steuer- und Regeleinrichtung 25 kommuniziert über ein sogenanntes Bussystem 27 in an sich bekannter Weise mit einer Vielzahl von Sensorsystemen 28. Einzelheiten bezüglich der Struktur der Sensorsysteme 28 sind detailliert in der DE 101 47 733 beschrieben, deren Inhalt hiermit vollumfänglich Bestandteil der Offenbarung dieser Patentanmeldung wird, sodass im Folgenden die Struktur der Sensorsysteme 28 nicht nochmals beschrieben wird. Zudem ist die Steuer- und Regeleinrichtung 25 mit einem eine Anzeigeeinheit 29 umfassenden Fahrerassistenzsystem 30 gekoppelt. Es liegt im Rahmen der Erfindung, dass das Fahrerassistenzsystem 30 auch unmittelbar in die Steuer- und Regeleinrichtung 25 integriert sein kann und die Visualisierung der von dem Fahrerassistenzsystem 30 bereitgestellten und nachfolgend noch näher erläuterten Informationen 31 auch unmittelbar in der der Steuer- und Regeleinrichtung 25 zugeordneten Anzeigeeinheit 24 erfolgt. Die Fahrerkabine 23 verfügt zudem über ein Lenkrad 32 und eine eine Vielzahl von noch näher zu beschreibenden Bedienelementen 33 umfassende Bedienkonsole 34. Die ein oder mehreren Anzeigeeinheiten 24, 29 sind so im Bereich der Bedienkonsole 34 positioniert, dass der Bediener 26 der landwirtschaftlichen Arbeitsmaschine 1 sowohl die Bedienelemente 33 als auch die Anzeigeeinheiten 24, 29 in einer Blickebene liegend erfassen kann.

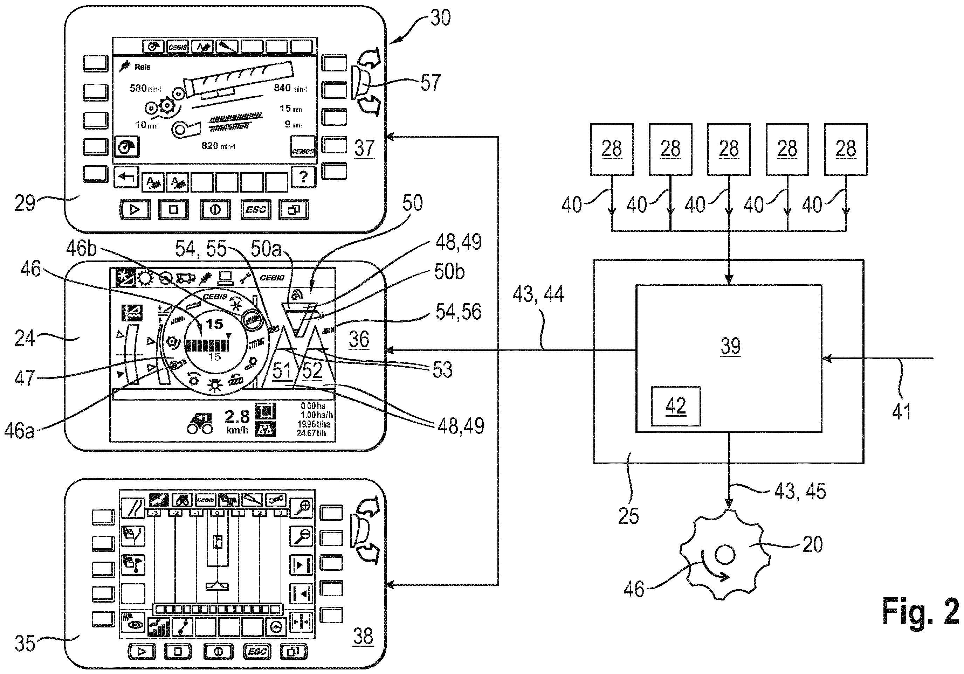

Fig. 2 zeigt eine schematische Darstellung der Steuer- und Regeleinrichtung 25 sowie deren Kopplung mit einer Vielzahl von Anzeigeeinheiten 24, 29, 35. Die Anzeigeeinheit 24 visualisiert ein noch näher zu beschreibendes elektronisches Bordinformationssystem 36. Die dem Fahrerassistenzsystem 30 zugeordnete Anzeigeeinheit 29 visualisiert in noch näher zu beschreibender Weise ein der landwirtschaftlichen Arbeitsmaschine 1 zugeordnetes elektronisches Maschinenoptimierungssystem 37. Die untere in Figur 2 dargestellte Anzeigeeinheit 35 visualisiert einen sogenannten Fahrautomat 38, auch GPS-Pilot genannt, wobei es im Rahmen der Erfindung liegt, dass der Fahrautomat 38 nicht über eine separate Anzeigeeinheit 35 verfügt sondern beispielsweise in der dem Fahrerassistenzsystem 30 zugeordneten Anzeigeeinheit 29 aufgerufen werden kann. Der Steuer- und Regeleinrichtung 25 ist zudem eine Recheneinheit 39 zugeordnet, die so beschaffen ist, dass sie neben den von den Sensorsystemen 28 generierten internen Informationen 40, externe Informationen 41 und in der Recheneinheit 39 selbst hinterlegte Informationen 42, wie etwa Expertenwissen, zu einer Vielzahl von Ausgangssignalen 43 verarbeiten kann. Die Ausgangssignale 43 sind dabei so beschaffen, dass sie zumindest Anzeigesteuersignale 44 und Arbeitsorgansteuersignale 45 umfassen, wobei erstere die Inhalte der Anzeigeeinheiten 24, 29, 35 bestimmen und letztere die Änderung der unterschiedlichsten Arbeitsparameter 46 der Arbeitsorgane 20 der landwirtschaftlichen Arbeitsmaschine 1 bewirken, wobei Pfeil 46 symbolisch für die Dreschtrommeldrehzahl steht. Die verfügbaren Anzeigeeinheiten 24, 29, 35 sind zudem so beschaffen, dass sie untereinander und mit der Steuer- und Regeleinrichtung 25 Daten austauschen können.

Die in Figur 2 dargestellten Inhalte der Anzeigeeinheiten 24, 29, 35 sind beispielhaft und werden nachfolgend näher beschrieben. Die dem elektronischen Bordinformationssystem 36 zugeordnete Anzeigeeinheit 24 umfasst in ihrem zentralen Bereich ein vom Bediener 26 ansteuerbares Auswahlfeld 47 , wobei in dem Auswahlfeld 47 einstellbare Arbeitsparameter 46, wie etwa die Gebläsedrehzahl 46a des der Reinigungseinrichtung 17 zugeordneten Gebläses 16 oder wie dargestellt die Öffnungsweite 46b der der Reinigungseinrichtung 17 zugeordneten oberen Siebebene 15 visualisiert sind, wobei der jeweils aktuelle Wert des Arbeitsparameters 46 im Innebereich des Auswahlfeldes 47 angezeigt wird. Zudem umfasst die Anzeigeeinheit 24 in ihrem rechtsseitigen Bereich Anzeigeelemente 48 zur Visualisierung aktueller Werte bestimmter Qualitätsparameter 49 der landwirtschaftlichen Arbeitsmaschine 1. Im dargestellten Ausführungsbeispiel visualisiert das obenseitig angeordnete Anzeigeelement 48 die Zusammensetzung der sogenannten "Überkehr" 50, wobei die linkseitige Darstellung das "Überkehrvolumen" 50a und die rechtsseitige Darstellung den "Kornanteil in der Überkehr" 50b visualisiert. Das untere, linke Anzeigeelement 48 visualisiert die sogenannten "Abscheideverluste" 51, d.h. diejenigen Kornverluste, die von der als Trennrotor 9 oder Hordenschüttler ausgeführten Trenneinrichtung 10 im rückwärtigen Bereich der landwirtschaftlichen Arbeitsmaschine 1 aus dieser ausgetragen und nicht in den Korntank 19 gefördert werden. Das untere, rechte Anzeigeelement 48 visualisiert die sogenannten "Reinigungsverluste" 52, wobei hier diejenigen Kornverluste angezeigt werden, die von der Reinigungseinrichtung 17 in analoger Weise zur Trenneinrichtung 10 aus der landwirtschaftlichen Arbeitsmaschine 1 ausgetragen und nicht in den Korntank 19 gefördert werden. Jedes der Anzeigeelemente 39 umfasst zudem einen als waagerechten Strich ausgeführten Sollwertanzeiger 53, der das maximal zulässige und vom Bediener 26 zuvor definierte Verlustniveau des jeweiligen Qualitätsparameters 49 definiert, sodass der Bediener 26 schnell erfassen kann, ob die landwirtschaftliche Arbeitsmaschine 1 eine hinreichende Arbeitsqualität aufweist. Aufgrund der komplexen Zusammenhänge zwischen verschiedensten Arbeitsparametern 46 und zumindest den Qualitätsparametern 49 sind die Einstelloptionen für die Trenneinrichtung 10 und die Reinigungseinrichtung 17 in sogenannten Einstellautomaten 54 hinterlegt. Im dargestellten Ausführungsbeispiel sind gemäß Figur 2 ein Abscheideautomat 55 für die Optimierung der Arbeitsweise der Trenneinrichtung 10 und ein Reinigungsautomat 56 für die Optimierung der Arbeitsweise der Reinigungseinrichtung 17 programmiert und in der Steuer- und Auswerteinrichtung 25 hinterlegt. Es liegt im Rahmen der Erfindung, dass jeder der verfügbaren Einstellautomaten 54 auch ganz oder teilweise in dem Fahrerassistenzsystem 30 hinterlegt sein kann. Ein Navigieren in dem elektronischen Bordinformationssystem 36 wird in der Regel durch Betätigung der zuvor beschriebenen, der Bedienkonsole 34 zugeordneten Bedienelemente 33 bewirkt.

Die in dem elektronischen Bordinformationssystem 36 visualisierten Qualitätsparameter 49 können in an sich bekannter und deshalb nicht näher beschriebenen Weise mittels des elektronischen Maschinenoptimierungssystem 37 optimiert werden, wobei das Navigieren in dem elektronischen Maschinenoptimierungssystem 37 entweder ebenfalls über die der Bedienkonsole 34 zugeordneten Bedienelemente 33 oder ein unmittelbar der Anzeigeeinheit 29 zugeordneten Dreh-Drück-Knopf 57 bewirkt wird. In analoger Weise wird in der Anzeigeeinheit 35 des ebenfalls an sich bekannten und daher nicht näher beschriebenen Fahrautomat 38 navigiert. Dies ist vorallem deshalb der Fall, da das elektronische Maschinenoptimierungssystem 37 und der Fahrautomat 38 in der Regel mittels derselben Anzeigeeinheit 29, 35 bedient und visualisiert werden.

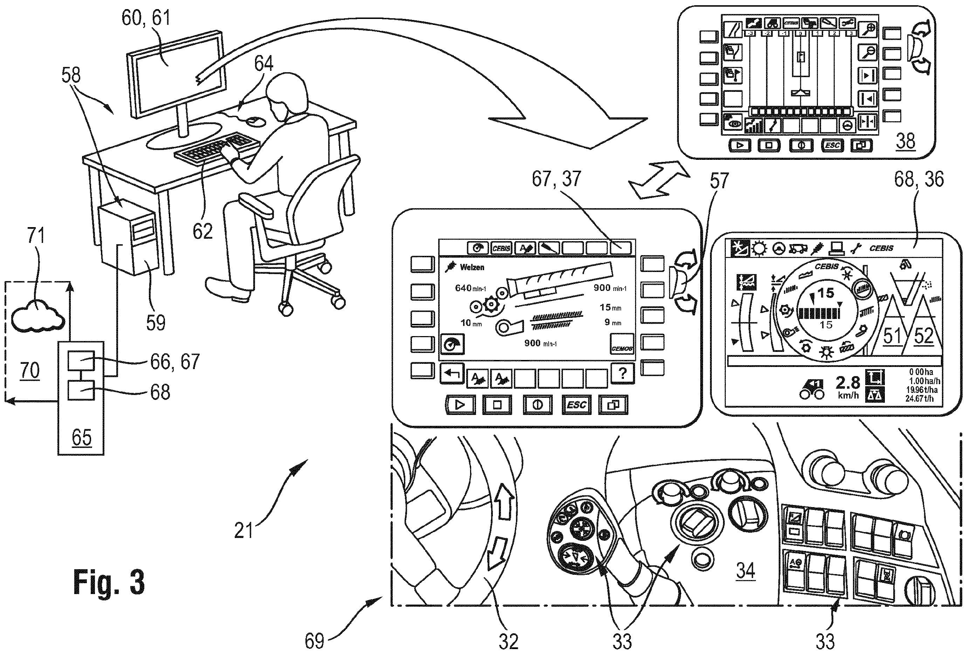

Fig. 3 zeigt nun schematisch den erfindungsgemäßen, die im Ausführungsbeispiel als Mähdrescher 2 ausgeführte landwirtschaftliche Arbeitsmaschine 1 nachbildenden Simulator 21. Im einfachsten Falle wird der Simulator 21 von einem sogenannten Home-PC 58 gebildet, der in an sich bekannter Weise aus einer Recheneinheit 59, einer als Monitor 61 ausgeführte Anzeigeeinheit 60 und einer aus Tatstatur 62 und Bedienmaus 63 gebildeten Bedieneinheit 64 besteht. Erfindungsgemäß umfasst die Recheneinheit 59 zumindest einen Softwaremodul 65, der ein Prozessmodel 66 des von der landwirtschaftlichen Arbeitsmaschine durchzuführenden und weiter oben zu Figur 1 beschriebenen Gutbearbeitungsprozess 67 sowie das aus dem Gutbearbeitungsprozess 67 folgende Maschinenverhalten 68 abbildet und in noch näher zu beschreibender Weise in der Anzeigeeinheit 60 visualisiert, wobei sowohl der visualisierte Gutbearbeitungsprozess 67 als auch das Maschinenverhalten 68 mittels der aus Tastatur 62 und Bedienmaus 63 bestehenden Bedieneinheit 64 editierbar sind. Der Gutbearbeitungsprozess 67 wird im beschriebenen Ausführungsbeispiel durch Visualisierung des elektronischen Maschinenoptimierungssystems 37 und das Maschinenverhalten 68 durch Visualisierung des elektronischen Bordinformationssystems 36 auf dem Monitor 61 des den Simulator 21 bildenden Home-PC's 58 dargestellt. Sowohl das Bordinformationssystem 36 als auch das Maschinenoptimierungssystem 37 sind auf dem Monitor 61 realitätsnah wiedergegeben, was auch die Wiedergabe der den Anzeigeeinheiten 24, 29 dieser Systeme 36, 37 zugeordneten, weiter unten noch näher zu beschreibenden Bedienelemente 69 einschließt. Zudem umfasst die Anzeigeeinheit 60 in ihrem unteren Bereich eine realitätsnahe Wiedergabe des der Fahrzeugkabine 23 zugeordneten Lenkrades 32 sowie der Bedienkonsole 34 und den von der Bedienkonsole 34 aufgenommenen Bedienelementen 33, wobei das Lenkrad 32, die Bedienkonsole 34 und die ihr zugeordneten Bedienelemente 33 nachfolgend zusammen als Bedienoberfläche 69 bezeichnet werde. Es liegt im Rahmen der Erfindung das die Anzeigeeinheit 35 des Fahrautomaten 38 zusätzlich oder alternativ in der Anzeigeeinheit 60 des Simulators 21 realitätsnah visualisiert wird. Die höchste Informationsdichte weist die Anzeigeeinheit 60 des Simulators 21 dann auf, wenn diese das elektronische Bordinformationssystem 36, das elektronische Maschineneinstellsystem 37, den Fahrautomat 38 und die Bedienoberfläche 69 realitätsnah visualisiert. Eine hochflexible Verfügbarkeit des erfindungsgemäßen Simulators 21 wird zudem dadurch erreicht, wenn der den Simulator 21 bildende Softwaremodul 65 in einem globalen Datennetzwerk 70 oder einer sogenannte Cloud 71 verfügbar ist, sodass er von beliebigen Home-PC's 58 abrufbar und auf diesen aktivierbar ist. Auf diese Weise kann der Simulator 21 auch als sogenannte Online-Lernplattform für die Simulation des Maschinenverhaltens 68 einer landwirtschaftlichen Arbeitsmaschine 1 betrieben werden.

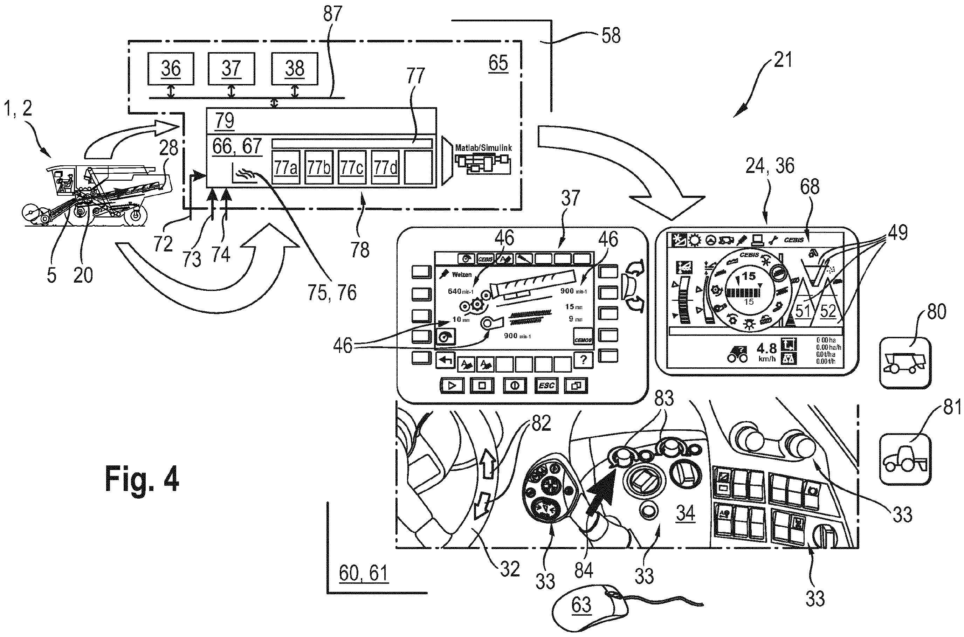

Figur 4 beschreibt nun Details der Wirkungsweise und Struktur des erfindungsgemäßen Simulators 21. Damit der Simulator 21 auf einem sogenannten Home-PC betreibbar ist werden an die Struktur des Softwaremoduls 65 des Simulators 21 besondere Anforderungen gestellt. Die Wirkungsweise einer landwirtschaftlichen Arbeitsmaschine 1, hier der Mähdrescher 2, wird maßgeblich von der Wirkungsweise der das Erntegut 5 bearbeitenden Arbeitsorgane 20, den Eigenschaften des Erntegutes 5 und verschiedensten äußeren Einflüssen bestimmt. Diese Zusammenhänge sind in an sich bekannter Weise in der landwirtschaftlichen Arbeitsmaschine 1 als sogenanntes Prozessmodell 66 hinterlegt. Das gleiche Prozessmodell 66 ist auch in dem Softwaremodul 65 des Simulators 21 verfügbar, sodass im Simulator 21 analog zur landwirtschaftlichen Arbeitsmaschine 1 der Gutbearbeitungsprozess 67 abgebildet wird. Zur Modellierung des Gutbearbeitungsprozesses 67 berücksichtigt das Prozessmodel 66 in an sich bekannter Weise zumindest gutspezifische Parameter 72, maschinenspezifische Parameter 73 und umweltspezifische Parameters 74. Anhand der in dem Prozessmodell 66 hinterlegten Kennlinien 75 und/oder Kennlinienfelder 76 werden die bereits beschriebenen Qualitätsparameter 49 der landwirtschaftliche Arbeitsmaschine 1 zunächst ermittelt und sodann als sogenanntes Maschinenverhalten 68 in der das Bordinformationssystem 36 repräsentierenden Anzeigeeinheit 24 auf dem Monitor 61 des den Simulator 21 bildenden Home-PC's 58 visualisiert. Damit alle der landwirtschaftlichen Arbeitsmaschine 1 zugeordneten Arbeitsorgane 20, Sensorsysteme 28 und Antriebsenergie übertragenden Baugruppen bestimmungsgemäß arbeiten sind der landwirtschaftlichen Arbeitsmaschine 1 in an sich bekannter Weise eine Vielzahl hier nicht näher erläuterter Steuergeräte 77 zugeordnet. Das logische Verhalten dieser Steuergeräte 77 in der landwirtschaftlichen Arbeitsmaschine 1 wird im Softwaremodul 65 des Simulators 21 in entsprechenden Softwaremodulen 78 simuliert, wobei diese Softwaremodule 78 im einfachsten Fall exakt diejenigen Softwaremodule sind, mit denen die Steuergeräte 77 auch unmittelbar in der landwirtschaftlichen Arbeitsmaschine 1 bestückt sind. In der hier dargestellten Ausführungsform sind beispielhaft die Softwaremodule 78 wichtiger Steuergeräte 77 schematisch angedeutet. Dabei handelt es sich zunächst um das sogenannte Hauptsteuermodul 77a welches Grundfunktionen der landwirtschaftlichen Arbeitsmaschine 1 bewirkt. Zudem ist ein sogenanntes Prozessführungsmodul 77b vorgesehen, welches die Grundfunktionen des elektronischen Maschinenoptimierungssystems 37 umfasst. Bei als Mähdrescher 2 ausgeführten landwirtschaftlichen Arbeitsmaschinen 1 hat weiter der Ertragsmessmodul 77c, welcher unter anderem die vom Mähdrescher 2 geerntete Kornmenge bestimmt, eine besondere Bedeutung, da der Erntegutertrag für viele im Mähdrescher 2 ablaufenden Regelungsprozesse eine regelungstechnische Führungsgröße bildet. Zudem ist in Figur 4 das Steuermodul 77d für die Verarbeitung der Steuersignale der der Bedienkonsole 34 zugeordneten Bedienelemente 33 schematisch dargestellt.

Neben den die Steuergeräte 77 simulierenden Softwaremodul 78 und dem Prozessmodell 66 umfasst der Softwaremodul 65 des Simulators 21 zudem einen Visualisierungssoftwaremodul 79 zur Steuerung der Anzeigeinhalte der dem Simulator 21 zugeordneten Anzeigeeinheit 60. Damit in dem Softwaremodul 65 des Simulators 21 eine effiziente, rationell mit Datenmengen umgehende Datenverarbeitung und damit die Nutzung eines Home-PC's 58 zur Simulation einer landwirtschaftlichen Arbeitsmaschine 1 möglich wird, sind die verfügbaren Softwaremodule 79, 78, 66, 38, 37, 36 über einen sogenannten virtuellen CAN-Bus 80 miteinander verknüpft, wobei die Programmierung dieser Softwaremodule 79, 78, 66, 38, 37, 36 vorzugsweise in einer verbreiteten, technisch bewährten Programmierumgebung wie etwa Simulink oder Matlab umgesetzt sind. Indem zumindest die in dem Simulator 21 hinterlegten Prozessmodelle 66 und das abgeleitete Maschinenverhalten 68 nahezu reale Betriebszustände der landwirtschaftlichen Arbeitsmaschine 1 abbilden wird zudem sichergestellt, dass der Simulator 21 sehr präzise das Trainieren von Steuerungsfähigkeiten des Bedieners 26 einer landwirtschaftlichen Arbeitsmaschine 1 unterstützt.

Weiter liegt es im Rahmen der Erfindung, dass der Typ der von dem Simulator 21 zu simulierenden landwirtschaftlichen Arbeitsmaschine 1 änderbar ist, sodass neben Mähdreschern 2 anderer Baujahre und Ausstattungsvarianten auch sogenannte Feldhäcksler 80 oder Traktor-Anbaugeräte-Kombinationen 81 oder beliebig ausgeführte landwirtschaftliche Arbeitsfahrzeuge simuliert werden können. Zudem ist vorgesehen, dass die jeweils zu aktivierenden, das elektronische Bordinformationssystem 36, das elektronische Maschinenoptimierungssystem 37 und den Fahrautomat 38 betreffenden Softwaremodule 65, 66, 67, 68 den in der landwirtschaftlichen Arbeitsmaschine 1 tatsächlich eingesetzt Originalsoftwaremodulen entsprechen.

Die in der Bedienoberfläche 69 visualisierten Bedienelemente 33 und das Lenkrad 32 sind in der Weise animiert, dass sie wie die in der Fahrzeugkabine 23 tatsächlich positionierten Elemente bedienbar sind. Im hier gargestellten Ausführungsbeispiel sind die Bewegungsrichtungen des Lenkrades 32 und eines Teils der Bedienelemente 33 durch Richtungspfeile 82, 83 angegeben. Mittels des die Bewegung der Maus 63 repräsentierenden Mauszeigers 84 können die jeweiligen Bedienelemente 33 und das Lenkrad 32 entweder durch Anklicken der Richtungspfeile 82, 83 oder durch unmittelbares Anklicken der Bedienelemente 33 eine noch näher zu beschreibende Änderung verschiedenster Parameter 46, 72, 73, 74 vorgenommen werden. Die Änderung dieser Parameter 46, 72, 73, 74 führt schließlich durch Abarbeitung der in dem Softwaremodul 65 des Simulators 21 hinterlegten Softwaremodule zu einer Änderung des in der Anzeigeeinheit 60 des Simulators 21 visualisierten Maschinenverhaltens 68. Auf diese Weise kann der Bediener 26 die bestehenden Prozesszusammenhänge und geeignete Einstelloptionen erlernen und trainieren.

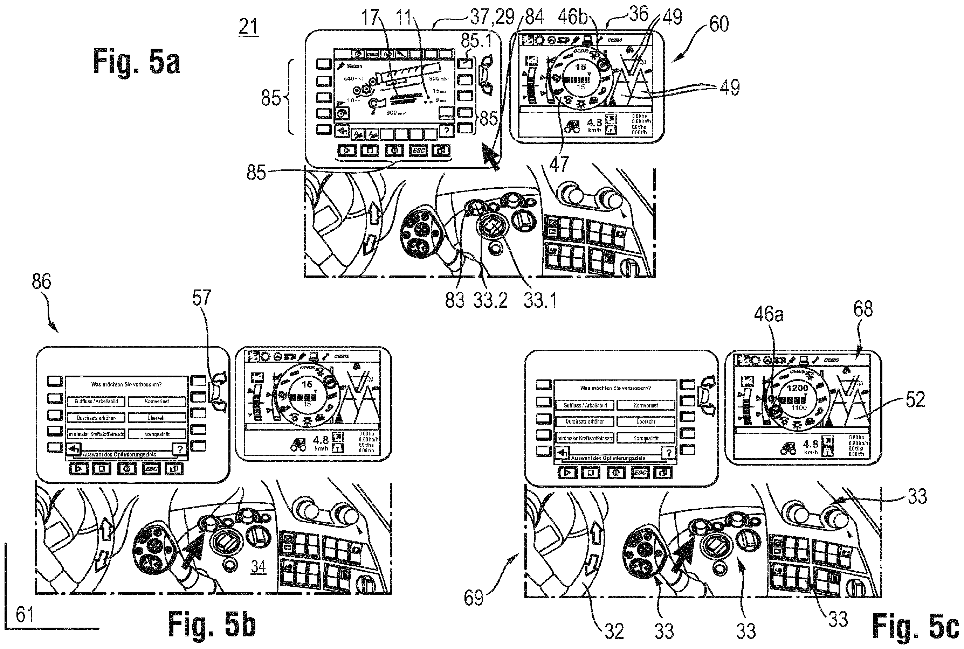

Figur 5 beschreibt die Animationsstruktur der Anzeigeeinheit 60 des Simulators 21 im Detail. Das visualisierte Maschinenoptimierungssystem 37 ist gemäß der in der Fahrzeugkabine 23 positionierten Anzeigeeinheit 29 animiert und bildet diese realitätsnah ab. Im Simulator 21 sind alle Bedienelemente 85 des Maschinenoptimierungssystems 37 in analoger Weise mittels des Mauszeigers 84 aktivierbar. Wird beispielsweise das Maschinenoptimierungssystem 37 gemäß Figur 5a durch Aktivierung des Bedienelementes 85.1 gestartet, schaltet der Visualisierungsbereich des Maschinenoptimierungssystems 37 in die in Figur 5b gezeigte Struktur um. Innerhalb des dann aktivierten Arbeitsmenüs 86 kann in analoger Weise zu der in der Fahrzeugkabine 23 positionierten Anzeigeeinheit 29 mittels des simulierten Dreh-Drück-Knopfes 57 in dem jeweiligen Arbeitsmenü 86 navigiert werden. Auf diese Weise kann in Analogie zu einem realen Maschineneinsatz eine Optimierung der Qualitätsparameter 49 und damit des Maschinenverhaltens 68 der landwirtschaftlichen Arbeitsmaschine 1, hier Mähdrescher 2, simuliert werden. Die von dem Softwaremodul 65 des Simulators 21 ermittelten Änderungen der Qualitätsparameter 49 und damit des Maschinenverhaltens 68 werden unmittelbar in dem der Anzeigeeinheit 60 zugeordneten Bordinformationssystem 36 visualisiert.

Die graphische Darstellung sowie die Animation des Bordinformationssystems 36 entspricht ebenfalls den realen Bedingungen, die sich bei der Bedienung des Bordinformationssystems 36 in der Fahrzeugkabine 23 ergeben. Alle in der Bedienoberfläche 69 visualisierten Bedienelemente 33, einschließlich des Lenkrades 32 sind analog den realen Verhältnissen in der Fahrzeugkabine 23 mittels Aktivierung durch den Mauszeiger 84 betätigbar. Beispielhaft sei hier das Umschalten von der Einstellung der Obersiebweite 46b (Figur 5a) zur Einstellung der Gebläsedrehzahl 46a (Figur 5c) beschrieben. Zunächst wird das entsprechende Bedienelement 33.1 von dem Ikon "Obersiebweite" auf das Ikon "Gebläsedrehzahl" mittels des Mauszeigers 84 gestellt. Diese Änderung wird in dem Auswahlfeld 47 des Bordinformationssystems 36 dadurch visualisiert, dass das zunächst hervorgehobene Ikon "Obersiebweite" 46b verblasst und sodann das Ikon "Gebläsedrehzahl" 46a hervorgehoben wird. Mittels des Bedienelementes 33.2 kann sodann der aktuelle Wert des Arbeitsparameters "Gebläsedrehzahl" 46a, der als Balkendiagramm im Inneren des Auswahlfeldes 47 visualisiert ist geändert werden. Die Änderung erfolgt in der bereits beschrieben Weise, nämlich, indem mittels des Mauszeigers 84 der dem Bedienelement 33.2 zugeordnete Richtungspfeil 83 rechts- oder linksseitig angeklickt wird. Die Änderung wird sodann unmittelbar in dem Auswahlfeld 47 visualisiert. Zugleich bewirkt die Änderung des Arbeitsparameters "Gebläsedrehzahl" 46a eine die realen Verhältnisse aufgrund der hinterlegten Kennlinien 75 und Kennlinienfelder 76 wiedergebende Änderung der visualisierten Qualitätsparameter 49. Im vorliegenden Fall hat die beispielhaft vorgenommene deutliche Erhöhung der Gebläsedrehzahl 46a dazu geführt, dass in der Reinigungseinrichtung 17 durch den erhöhten Luftstrom mehr Körner 11 aus dem Mähdrescher 2 gefördert werden. Diese Erhöhung der Reinigungsverluste 52 wird durch eine entsprechend vergrößerte, diesen Qualitätsparameter 49 visualisierende Dreieck-förmige Fläche angezeigt, siehe Figur 5c. Für alle am Monitor 61 editierbaren Parameter liegt es im Rahmen der Erfindung, dass diese nicht mittels des Mauszeigers 84 aktiviert werden, sondern dass für den Fall, dass der Monitor 61 als Touchscreen-Monitor ausgeführt ist die Editierung der jeweiligen Parameter auch durch entsprechende Berührung des Monitors selbst bewirkt werden kann.

**Bezugszeichenliste:**

| | | | |
|---|---|---|---|
| 1 | landwirtschaftliche Arbeitsmaschine | 32 | Lenkrad |
| 2 | Mähdrescher | 33 | Bedienelemente |
| 3 | Getreideschneidwerk | 34 | Bedienkonsole |
| 4 | Schrägförderer | 35 | Anzeigeeinheit |
| 5 | Erntegutstrom | 36 | Bordinformationssystem |
| 6 | Dreschkorb | 37 | Maschinenoptimierungssystem |
| 7 | Dreschorgan | 38 | Fahrautomat |
| 8 | Umlenktrommel | 39 | Recheneinheit |
| 9 | Trennrotor | 40 | interne Information |
| 10 | Trenneinrichtung | 41 | externe Information |
| 11 | Körner | 42 | Information |
| 12 | Rücklaufboden | 43 | Ausgangssignal |
| 13 | Zuführboden | 44 | Anzeigesignal |
| 14 | Siebebene | 45 | Arbeitsorgansignal |
| 15 | Siebebene | 46 | Arbeitsparameter |
| 16 | Gebläse | 47 | Auswahlfeld |
| 17 | Reinigungseinrichtung | 48 | Anzeigeelement |
| 18 | Elevator | 49 | Qualitätsparameter |
| 19 | Korntank | 50 | Überkehr |
| 20 | Arbeitsorgan | 50a | Überkehrvolumen |
| 21 | Simulator | 50b | Kornanteil in der Überkehr |
| 22 | Simulationsobjekt | 51 | Abscheideverlust |
| 23 | Fahrzeugkabine | 52 | Reinigungsverlust |
| 24 | Anzeigeeinheit | 53 | Sollwertanzeiger |
| 25 | Steuer- und Regeleinrichtung | 54 | Einstellautomat |
| 26 | Bediener | 55 | Abscheideautomat |
| 27 | Bussystem | 56 | Reinigungsautomat |
| 28 | Sensorsystem | 57 | Dreh-Drück-Knopf |
| 29 | Anzeigeeinheit | 58 | Home-PC |
| 30 | Fahrerassistenzsystem | 59 | Recheneinheit |
| 31 | Informationen | 60 | Anzeigeeinheit |
| 61 | | | Monitor |
| 62 | | | Tastatur |
| 63 | | | Maus |
| 64 | | | Bedieneinheit |
| 65 | | | Softwaremodul |
| 66 | | | Prozessmodell |
| 67 | | | Gutbearbeitungsprozess |
| 68 | | | Maschinenverhalten |
| 69 | | | Bedienoberfläche |
| 70 | | | globales Datennetzwerk |
| 71 | | | Cloud |
| 72 | | | gutspezifischer Parameter |
| 73 | | | maschinenspezifischer Parameter |
| 74 | | | umweltspezifischer Parameter |
| 75 | | | Kennlinie |
| 76 | | | Kennlinienfeld |
| 77 | | | Steuergerät |
| 78 | | | Softwaremodul |
| 79 | | | Visualisierungssoftwaremodul |
| 80 | | | Feldhäcksler |
| 81 | | | Traktor-Anbaugeräte-Kombination |
| 82 | | | Richtungspfeil |
| 83 | | | Richtungspfeil |
| 84 | | | Mauszeiger |
| 85 | | | Bedienelement |
| 86 | | | Arbeitsmenü |
| 87 | | | virtueller CAN-Bus |

## Patentansprüche

1. Simulator einer landwirtschaftlichen Arbeitsmaschine zumindest eine Anzeigeneinheit (60) umfassend, wobei die zumindest eine Anzeigeneinheit (60) mit einer Bedieneinheit (64) und zumindest einer Recheneinheit (59) gekoppelt ist und wobei die zu simulierende landwirtschaftliche Arbeitsmaschine einstellbare Arbeitsorgane und die Einstellung der Arbeitsorgane realisierende Bedienelemente umfasst,
**dadurch gekennzeichnet,**
**dass** in der Recheneinheit (59) ein Softwaremodul (65) hinterlegt ist und das Softwaremodul (65) zumindest das Prozessmodell (66) des von der landwirtschaftlichen Arbeitsmaschine (1) durchzuführenden Gutbearbeitungsprozesses (67) und das aus dem Gutbearbeitungsprozess (67) folgende Maschinenverhalten (68) abbildet und die Anzeigeeinheit (60) eine realitätsnahe Bedienoberfläche (69) in der Weise simuliert, dass neben der Visualisierung der realen Bedienelemente (33) der Gutbearbeitungsprozess (67) und das Maschinenverhalten (68) visualisiert werden, wobei das Prozessmodell (66) in der Anzeigeeinheit (60) visualisiert wird und mittels der Bedieneinheit (64) editierbar ist,
wobei der Typ der zu simulierenden landwirtschaftlichen Arbeitsmaschine (1) auswählbar ist und die zumindest jeweils zu aktivierenden, das elektronische Bordinformationssystem (36), das elektronische Maschinenoptimierungssystem (37) und den Fahrautomat (38) betreffenden Softwaremodule den in der landwirtschaftlichen Arbeitsmaschine tatsächlich eingesetzten Originalsoftwaremodulen entsprechen, wobei die Recheneinheit (59) Softwaremodule zur Simulation des Prozessmodells (66), des Maschinenverhaltens (68) und der der jeweiligen landwirtschaftlichen Arbeitsmaschine (1) zugeordneten Steuergeräte (77) umfasst und wobei die Softwaremodule zumindest das elektronische Bordinformationssystem (36) und/oder das elektronische Maschinenoptimierungssystem (37) und/oder den Fahrautomat (38) nachbilden, wobei zumindest die Softwaremodule, die Anzeigeeinheit (60) und das oder die hinterlegten Prozessmodelle (66) softwareseitig über einen virtuellen CAN-Bus (87) miteinander verknüpft sind.

2. Simulator einer landwirtschaftlichen Arbeitsmaschine zumindest eine Anzeigeneinheit (60) umfassend nach Anspruch 1,
**dadurch gekennzeichnet,**
**dass** das in der Anzeigeneinheit (60) visualisierte Maschinenverhalten (68) Qualitätsparameter (49) der landwirtschaftlichen Arbeitsmaschine (1) umfasst und diese in der Weise ermittelt werden, dass das Prozessmodell (66) gutspezifische Parameter (72), maschinenspezifische Parameter (73) und umweltspezifische Parameter (74) berücksichtigt, und aus diesen Parametern (72-74) anhand hinterlegter Kennlinien (75) und/oder Kennlinienfelder (76) zumindest diese Qualitätsparameter (49) der landwirtschaftlichen Arbeitsmaschine (1) ermittelt.

3. Simulator einer landwirtschaftlichen Arbeitsmaschine zumindest eine Anzeigeneinheit (60) umfassend nach einem der vorhergehenden Ansprüche,
**dadurch gekennzeichnet,**
**dass** die Anzeigeeinheit (60) das elektronisches Bordinformationssystem (36), das elektronisches Maschinenoptimierungssystem (37), den Fahrautomat (38) und die Bedienoberfläche (69) realitätsnah visualisiert.

4. Simulator einer landwirtschaftlichen Arbeitsmaschine zumindest eine Anzeigeneinheit (60) umfassend nach Anspruch 1,
**dadurch gekennzeichnet,**
**dass** die Visualisierung der realitätsnahen Bedienoberfläche (69) zumindest das Lenkrad (32) und in der Fahrzeugkabine (23) der jeweiligen landwirtschaftlichen Arbeitsmaschine (1) positionierte Bedienelemente (33) umfasst.

5. Simulator einer landwirtschaftlichen Arbeitsmaschine zumindest eine Anzeigeneinheit (60) umfassend nach Anspruch 4,
**dadurch gekennzeichnet,**
**dass** die Bedienelemente (33) sowohl einer Maschinenkonsole (34) als auch in der Fahrzeugkabine (23) der landwirtschaftlichen Arbeitsmaschine (1) positionierten Anzeigeeinheiten (24, 29) zugeordnete Bedienelemente (57, 85) umfassen.

6. Simulator einer landwirtschaftlichen Arbeitsmaschine zumindest eine Anzeigeneinheit (60) umfassend nach Anspruch 4,
**dadurch gekennzeichnet,**
**dass** dem Lenkrad (32) und den Bedienelementen (33) Richtungspfeile (82, 83) zugeordnet sind bei deren Aktivierung das Lenkrad (32) und die jeweiligen Bedienelemente (33) betätigt werden.

7. Simulator einer landwirtschaftlichen Arbeitsmaschine zumindest eine Anzeigeneinheit (60) umfassend nach Anspruch 6,
**dadurch gekennzeichnet,**
**dass** die Aktivierung der Richtungspfeile (82, 83) eine Lenkbewegung oder die Einstellung eines Parameters (46, 72-74) simuliert, wobei die Aktivierung der Bedienelemente (33, 57, 85) ein Auswählen eines Arbeitsmenüs (86) , ein Navigieren in dem gewählten Arbeitsmenü (86) und ein Auswählen bestimmter Einstellwerte der Arbeitsparameter (46) umfasst und die Aktivierung der Richtungspfeile (82, 83) durch Betätigung eines der Recheneinheit (59) zugeordneten Bedieneinheit (62-64) oder bei Ausführung der Anzeigeeinheit (60) als Touchscreen-Monitor (61) durch unmittelbare Berührung auf dem Touchscreen-Monitor (61) bewirkt wird.

8. Simulator einer landwirtschaftlichen Arbeitsmaschine nach einem der vorhergehenden Ansprüche,
**dadurch gekennzeichnet,**
**dass** das Prozessmodell (66) und das daraus abgeleitete Maschinenverhalten (68) reale Betriebszustände der landwirtschaftlichen Arbeitsmaschine (1) abbilden.

## Claims

1. A simulator for an agricultural working machine, comprising at least one display unit (60), wherein the at least one display unit (60) is coupled to an operating unit (64) and at least one computing unit (59) and wherein the agricultural working machine to be simulated comprises adjustable working units and operating elements which carry out the adjustment of the working units,
**characterized in that**
a software module (65) is stored in the computing unit (59) and the software module (65) represents at least the process model (66) of crop processing processes (67) to be carried out by the agricultural working machine (1) and the machine behaviour (68) resulting from the crop processing process (67), and the display unit (60) simulates a realistic operator interface (69) in a manner such that, in addition to visualising the real operating elements (33), the crop processing process (67) and the machine behaviour (68) are visualised, wherein the process model (66) is visualised in the display unit (60) and can be edited by means of the operating unit (64),
wherein the type of the agricultural working machine (1) to be simulated can be selected and the software modules to be at least respectively activated which relate to the electronic on-board information system (36), the electronic machine optimization system (37) and the automated driving system (38) correspond to the original software modules actually used in the agricultural working machine, wherein the computing unit (59) comprises software modules for simulating the process model (66), the machine behaviour (68) and the operating units (77) associated with the respective agricultural working machine (1), and wherein the software modules replicate at least the electronic on-board information system (36) and/or the electronic machine optimization system (37) and/or the automated driving system (38), wherein at least the software modules, the display unit (60) and the stored process model or models (66) are linked to one another in the software via a virtual CAN bus (87).

2. The simulator for an agricultural working machine comprising at least one display unit (60) according to claim 1,
**characterized in that**
the machine behaviour (68) visualised in the display unit (60) comprises quality parameters (49) of the agricultural working machine (1) and these are determined in a manner such that the process model (66) takes crop-specific parameters (72), machine-specific parameters (73) and environment-specific parameters (74) into account and, with the aid of stored characteristic curves (75) and/or performance maps (76), determines at least these quality parameters (49) of the agricultural working machine (1) from these parameters (72-74).

3. The simulator for an agricultural working machine comprising at least one display unit (60) according to one of the preceding claims,
**characterized in that**
the display unit (60) realistically visualises the electronic on-board information system (36), the electronic machine optimization system (37), the automated driving system (38) and the operator interface (69).

4. The simulator for an agricultural working machine comprising at least one display unit (60) according to claim 1,
**characterized in that**
the visualisation of the realistic operator interface (69) comprises at least the steering wheel (32) and operating elements (33) positioned in the driver's cab (23) of the respective agricultural working machine (1).

5. The simulator for an agricultural working machine comprising at least one display unit (60) according to claim 4,
**characterized in that**
the operating elements (33) comprise both a machine console (34) as well as operating elements (57, 85) associated with display units (24, 29) positioned in the driver's cab (23) of the agricultural working machine (1).

6. The simulator for an agricultural working machine comprising at least one display unit (60) according to claim 4,
**characterized in that**
directional arrows (82, 83) are associated with the steering wheel (32) and the operating elements (33), the activation of which actuate the steering wheel (32) and the respective operating elements (33).

7. The simulator for an agricultural working machine comprising at least one display unit (60) according to claim 6,
**characterized in that**
the activation of the directional arrows (82, 83) simulates a steering movement or the adjustment of a parameter (46, 72-74), wherein the activation of the operating elements (33, 57, 85) comprises a selection of a working menu (86), navigation in the selected working menu (86) and a selection of specific adjustment values for the working parameters (46), and the directional arrows (82, 83) are activated by actuating an operating unit (62-64) associated with the computing unit (59) or by configuring the display unit (60) as a touchscreen monitor (61) and by directly touching the touchscreen monitor (61).

8. The simulator for an agricultural working machine according to one of the preceding claims,
**characterized in that**
the process model (66) and the machine behaviour (68) derived therefrom replicates real operating states of the agricultural working machine (1).

## Revendications

1. Simulateur d'une machine de travail agricole incluant au moins une unité d'affichage (60), la au moins une unité d'affichage (60) étant couplée à une unité d'utilisation (64) et au moins à une unité de calcul (59) et la machine de travail agricole à simuler incluant des organes de travail réglables et des éléments d'utilisation réalisant le réglage des organes de travail, **caractérisé en ce que** dans l'unité de calcul (59) étant enregistré un module de logiciel (65) et le module de logiciel (65) reproduisant au moins le modèle de processus (66) du processus de traitement de produit récolté (67) à exécuter par la machine de travail agricole (1) et le comportement de machine (68) découlant du processus de traitement de produit récolté (67), et l'unité d'affichage (60) simulant une surface d'utilisation réaliste (69) de façon que, en plus de la visualisation des éléments d'utilisation réels (33), le processus de traitement de produit récolté (67) et le comportement de machine (68) soient visualisés, le modèle de processus (66) étant visualisé dans l'unité d'affichage (60) et pouvant être modifié au moyen de l'unité d'utilisation (64),
le type de la machine de travail agricole (1) à simuler étant sélectionnable et les modules de logiciel au moins respectivement à activer, relatifs au système électronique d'information de bord (36), au système électronique d'optimisation de machine (37) et à l'automate de conduite (38), correspondant aux modules de logiciel originaux effectivement mis en œuvre dans la machine de travail agricole, l'unité de calcul (59) incluant des modules de logiciel pour la simulation du modèle de processus (66), du comportement de machine (68) et des appareils de commande (77) associés à la machine de travail agricole respective (1), et les modules de logiciel reproduisant au moins le système électronique d'information de bord (36) et/ou le système électronique d'optimisation de machine (37) et/ou l'automate de conduite (38), au moins les modules de logiciel, l'unité d'affichage (60) et le ou les modèles de processus enregistrés (66) étant liés entre eux côté logiciel par l'intermédiaire d'un bus CAN virtuel (87).

2. Simulateur d'une machine de travail agricole incluant une unité d'affichage (60) selon la revendication 1,
**caractérisé en ce que**
le comportement de machine (68) visualisé sur l'unité d'affichage (60) inclut des paramètres de qualité (49) de la machine de travail agricole (1) et ceux-ci sont déterminés de façon que le modèle de processus (66) prenne en compte des paramètres spécifiques au produit (72), des paramètres spécifiques à la machine (73) et des paramètres spécifiques à l'environnement (74) et, à partir de ces paramètres (72-74), détermine au moins ces paramètres de qualité (49) de la machine de travail agricole (1) à l'aide de courbes caractéristiques (75) et/ou de diagrammes de courbes caractéristiques (76) enregistrés.

3. Simulateur d'une machine de travail agricole incluant au moins une unité d'affichage (60), selon une des revendications précédentes, **caractérisé en ce que**
l'unité d'affichage (60) visualise de façon réaliste le système électronique d'information de bord (36), le système électronique d'optimisation de machine (37), l'automate de conduite (38) et la surface d'utilisation (69).

4. Simulateur d'une machine de travail agricole incluant au moins une unité d'affichage (60), selon la revendication 1,
**caractérisé en ce que**
la visualisation de la surface d'utilisation réaliste (69) inclut au moins le volant (32) et des éléments d'utilisation (33) positionnés dans la cabine de véhicule (23) de la machine de travail agricole respective (1).

5. Simulateur d'une machine de travail agricole incluant au moins une unité d'affichage (60), selon la revendication 4,
**caractérisé en ce que**
les éléments d'utilisation (33) incluent des éléments d'utilisation (57, 85) associés aussi bien à une console de machine (34) qu'à des unités d'affichage (24, 29) positionnées dans la cabine de véhicule (23) de la machine de travail agricole (1) .

6. Simulateur d'une machine de travail agricole incluant au moins une unité d'affichage (60), selon la revendication 4,
**caractérisé en ce que**
au volant (32) et aux éléments d'utilisation (33) sont associées des flèches directionnelles (82, 83) lors de l'activation desquelles le volant (32) et les éléments d'utilisation respectifs (33) sont actionnés.

7. Simulateur d'une machine de travail agricole incluant au moins une unité d'affichage (60), selon la revendication 6,
**caractérisé en ce que**
l'activation des flèches directionnelles (82, 83) simule un déplacement du volant ou le réglage d'un paramètre (46, 72-74), l'activation des éléments d'utilisation (33, 57, 85) incluant une sélection d'un menu de travail (86), une navigation dans le menu de travail sélectionné (86) et une sélection de valeurs de réglage déterminées des paramètres de travail (46), et l'activation des flèches directionnelles (82, 83) s'effectuant par actionnement d'une unité d'utilisation (62-64) associée à l'unité de calcul (59) ou, en cas de configuration de l'unité d'affichage (60) en moniteur à écran tactile (61), par un contact direct du moniteur à écran tactile (61).

8. Simulateur d'une machine de travail agricole selon une des revendications précédentes,
**caractérisé en ce que**,
le modèle de processus (66) et le comportement de machine (68) qui en dérive reproduisent des états de fonctionnement réels de la machine de travail agricole (1).
